# EUROPÄISCHE PATENTANMELDUNG

(11) **EP 0 787 966 A1**
(43) Veröffentlichungstag der Anmeldung: **06.08.1997**
(21) Anmeldenummer: 97101986.4
(22) Anmeldetag: 07.02.1997
(51) Int. Cl.: F27D 23/00, C21C 5/52

(54) **Verfahren zum Erschmelzen von Metallen sowie zum Warmhalten ebensolcher Schmelzen**

(30) Priorität: 09.02.1996 DE 19604769; 14.02.1996 DE 19605499
(71) Anmelder: Linde Aktiengesellschaft, 65189 Wiesbaden (DE)
(72) Erfinder: Strigl, Reinhard, Dipl.-Ing., 80995 München (DE)
(74) Vertreter: Zahn, Christoph

(57) **Zusammenfassung**

Verfahren zum Erschmelzen von Metallen, insbesondere von Stahl, Gußeisen, Kupfer, Messing, Bronze oder Aluminium, sowie zum Warmhalten ebensolcher Schmelzen, wobei ein Kohlenstaub verbrennender Brenner, dem der Kohlenstaub mittels eines gasförmigen Fördermediums zugeführt wird, verwendet wird. Hierbei werden als Fördermedium für den Kohlenstaub Kohlendioxid, Kohlendioxid-Sauerstoff-Gemische, Kohlendioxid-Luft-Gemische, Kohlendioxid-Argon-Gemische, Argon oder Argon Sauerstoff-Gemische verwendet. Dies führt zu einem nahezu NOₓ-freien Ofenabgas. Zudem wird die Wasserstoff- bzw. Wasserdampf und Stickstoffaufnahme in die Schmelze wesentlich reduziert.

## Beschreibung

Die Erfindung betrifft ein Verfahren zum Erschmelzen von Metallen, insbesondere von Stahl, Gußeisen, Kupfer, Messing, Bronze oder Aluminium, sowie zum Warmhalten ebensolcher Schmelzen.

Das Erschmelzen von Stahl, Gußeisen, Kupfer, Messing, Bronze oder Aluminium erfolgt z.B. in Drehtrommel- oder Elektrolichtbogenöfen mittels Luft- und Sauerstoffbrennern. Als Brennstoff für diese Luft- und Sauerstoffbrenner wird Schweröl, Steinkohlenteeröl, Heizöl, Propan, Butan oder Erdgas verwendet.

Bei den oben erwähnten Erschmelzungsprozessen sollen die entstehenden Verbrennungsgase möglichst wenig Wasserstoff und Wasserdampf enthalten, um die Wasserstoffaufnahme der Schmelze so gering wie möglich zu halten bzw. ganz zu vermeiden. Insbesondere zu Beginn der Warmhalte- oder Überhitzungsphase erreicht die Wasserstoffaufnahme in die Schmelze ein Maximum. Dies gilt umso mehr, wenn die schützende Schlackeschicht von der Schmelze entfernt worden ist.

Auch die Aufnahme von Stickstoff durch die Schmelze ist in den meisten Fällen unerwünscht. Zum Schutz der Umwelt ist zudem danach zu trachten, daß der NOₓ-Gehalt in den Ofenabgasen so gering wie möglich gehalten wird, um eine ansonsten notwendige Nachreinigungsstufe vermeiden zu können.

Durch den Einsatz von Plasmabrennern könnten zwar die oben genannten Nachteile hinsichtlich unerwünschter Wasserstoffaufnahme und NOₓ-Bildung vermieden werden, jedoch sind die Investitionskosten für einen mit einem Plasmabrenner ausgestatteten Ofen vergleichsweise hoch. Aus diesem Grunde findet diese Lösung in der Praxis kaum Verwendung.

Aufgabe der vorliegenden Erfindung ist es, ein Verfahren zum Erschmelzen von Metallen, insbesondere von Stahl, Gußeisen, Kupfer, Messing, Bronze oder Aluminium, sowie zum Warmhalten ebensolcher Schmelzen anzugeben, bei dem eine möglichst geringe Wasserdampf- bzw. Wasserstoffaufnahme sowie eine möglichst geringe NOₓ-Bildung die Folge ist.

Dies wird erfindungsgemäß dadurch erreicht, daß zum Erschmelzen von Metallen
sowie
zum Warmhalten ebensolcher Schmelzen ein Kohlenstaub verbrennender Brenner,
dem
der Kohlenstaub mittels eines gasförmigen Fördermediums zugeführt wird, verwendet wird.

Durch die Verwendung von Kohlenstaub als Brennstoff für Luft- und Sauerstoffbrenner wird die Wasserstoff- und Wasserdampfaufnahme in die Schmelze deutlich verringert. Werden als Fördermedium für den Kohlenstaub Stickstoff oder getrocknete (Preß-)Luft verwendet, werden die unerwünschte NOₓ-Bildung und die mit ihr verbundenen notwendigen Nachreinigungsschritte bzw. -stufen dadurch jedoch nicht vermieden.

Das erfindungsgemäße Verfahren weiterbildend wird daher vorgeschlagen, daß als Fördermedium für den Kohlenstaub Kohlendioxid, Kohlendioxid-Sauerstoff-Gemische, Kohlendioxid-Luft-Gemische, Kohlendioxid-Argon-Gemische, Argon oder Argon Sauerstoff-Gemische verwendet werden.

Es hat sich herausgestellt, daß sich die NOₓ-Bildung unter Aufrechterhaltung einer guten Brennerfunktion bei der Verwendung von Kohlendioxid, Kohlendioxid-Sauerstoff-Gemischen, Kohlendioxid-Luft-Gemischen, Kohlendioxid-Argon-Gemischen, Argon oder Argon-Sauerstoff-Gemischen als Kohlenstaub-Fördermedien deutlich verringern läßt. Diese Verringerung der NOₓ-Bildung geht zudem mit einer Minimierung der Wasserdampf- bzw. Wasserstoffeinbringung in die Schmelze während der Schmelz- und Warmhaltephase einher.

Während der Betriebsphasen ist ferner darauf zu achten, daß das Gemisch aus Fördermedium und Kohlenstaub so eingestellt wird, daß jegliche Explosionsgefahr ausgeschlossen ist. Aus diesem Grund ist insbesondere der Sauerstoffanteil im Falle eines Sauerstoff-enthaltenden Fördermediums im Auge zu behalten.

Das erfindungsgemäße Verfahren weiterbildend wird daher vorgeschlagen, daß bei der Verwendung eines Kohlendioxid-Sauerstoff-Gemisches als gasförmiges Fördermedium ein Sauerstoffanteil X mit 0 < X ≤ 10 Vol.-% eingestellt wird.

Werden bei der Verwendung eines Kohlendioxid-Sauerstoff-Gemisches als gasförmiges Fördermedium die genannten Sauerstoffanteile eingestellt, so läßt sich eine Explosionsgefahr ausschließen.

Das gleiche gilt, wenn bei der Verwendung eines Kohlendioxid-Luft-Gemisches als gasförmiges Fördermedium, ein Luftanteil Y mit 0 < Y ≤ 50 Vol.-%, und bei der Verwendung eines Argon-Sauerstoff-Gemisches als gasförmiges Fördermedium ein Sauerstoffanteil X mit 0 < X ≤ 10 Vol.-% eingestellt wird.

Bei der Verwendung eines Kohlendioxid-Argon-Gemisches als gasförmiges Fördermedium kann, gemäß einer weiteren vorteilhaften Ausgestaltung des erfindungsgemäßen Verfahrens, ein Argonanteil Z mit 0 < Z < 100 Vol.-% eingestellt werden, da bei diesem Gemisch eine Explosionsgefahr zur Gänze ausgeschlossen werden kann.

Es ist anzumerken, daß sämtliche der vorgenannten Fördermedien ein Verbrennen des Kohlenstaubes mit Sauerstoff in einem sog. Injektor-Brenner ermöglichen.

Die Bereitstellung der als Fördermedien verwendeten Gase Sauerstoff, Kohlendioxid und/oder Argon kann z. B. durch Anlieferung in flüssiger Form und/oder durch deren Produktion vor Ort erfolgen.

Nachfolgend seien nochmals die Vorteile des erfindungsgemäßen Verfahrens genannt:
- die Förderung des Kohlenstaubes erfolgt unter inerten und sicheren Bedingungen;
- im Falle relativ dichter Öfen ist das Ofenabgas NOₓ-frei;
- eine Wasserstoff- bzw. Wasserdampf- und Stickstoffaufnahme durch die Schmelze wird sowohl in der Schmelz- als auch in der Warmhaltephase vermieden.

## Patentansprüche

1. Verfahren zum Erschmelzen von Metallen, insbesondere von Stahl, Gußeisen, Kupfer, Messing, Bronze oder Aluminium, sowie zum Warmhalten ebensolcher Schmelzen, **dadurch gekennzeichnet**, daß ein Kohlenstaub verbrennender Brenner, dem der Kohlenstaub mittels eines gasförmigen Fördermediums zugeführt wird, verwendet wird.

2. Verfahren zum Erschmelzen von Metallen sowie zum Warmhalten ebensolcher Schmelzen nach Anspruch 1, dadurch gekennzeichnet, daß als gasförmiges Fördermedium für den Kohlenstaub Kohlendioxid, Kohlendioxid-Sauerstoff-Gemische, Kohlendioxid-Luft-Gemische, Kohlendioxid-Argon-Gemische, Argon oder Argon-Sauerstoff-Gemische verwendet werden.

3. Verfahren zum Erschmelzen von Metallen sowie zum Warmhalten ebensolcher Schmelzen nach Anspruch 2, dadurch gekennzeichnet, daß bei der Verwendung eines Kohlendioxid-Sauerstoff-Gemisches als gasförmiges Fördermedium ein Sauerstoffanteil X mit 0 < X ≤ 10 Vol.-% eingestellt wird.

4. Verfahren zum Erschmelzen von Metallen sowie zum Warmhalten ebensolcher Schmelzen nach Anspruch 2, dadurch gekennzeichnet, daß bei der Verwendung eines Kohlendioxid-Luft-Gemisches als gasförmiges Fördermedium ein Luftanteil Y mit 0 < Y ≤ 50 Vol.-% eingestellt wird.

5. Verfahren zum Erschmelzen von Metallen sowie zum Warmhalten ebensolcher Schmelzen nach Anspruch 2, dadurch gekennzeichnet, daß bei der Verwendung eines Kohlendioxid-Argon-Gemisches als gasförmiges Fördermedium ein Argonanteil Z mit 0 < Z < 100 Vol.-% eingestellt wird.

6. Verfahren zum Erschmelzen von Metallen sowie zum Warmhalten ebensolcher Schmelzen nach Anspruch 2, dadurch gekennzeichnet, daß bei der Verwendung eines Argon-Sauerstoff-Gemisches als gasförmiges Fördermedium ein Sauerstoffanteil X mit 0 < X ≤ 10 Vol.-% eingestellt wird.
